# EUROPEAN PATENT SPECIFICATION

(11) **EP 2 020 534 B1**
(45) Date of publication and mention of the grant of the patent: **30.05.2012**
(21) Application number: 08155874.4
(22) Date of filing: 08.05.2008
(51) Int. Cl.: F16H 9/18, F16H 57/04

(54) **Power unit**
Triebwerk
Bloc d'alimentation

(30) Priority: 26.07.2007 JP 2007194962
(43) Date of publication of application: 04.02.2009
(73) Proprietor: Honda Motor Co., Ltd., Tokyo 107-8556 (JP)
(72) Inventor: Ishikawa, Hideo c/o Honda R&D Co., Ltd., Saitama 351-0193 (JP); Kakemizu, Kenichiro c/o Honda R&D Co., Ltd., Saitama 351-0193 (JP); Watanabe, Satoru c/o Honda R&D Co., Ltd., Saitama 351-0193 (JP)
(74) Representative: Rupp, Christian

(56) References cited:
- EP-A- 1 223 366
- EP-A- 1 443 246
- EP-A- 1 767 759
- ES-A1- 2 273 532
- US-A1- 2007 023 220

## Description

The present invention relates to a power unit having a belt type non-stage transmission together with an internal combustion engine.

A power unit having a structure in which a drive pulley of a belt type non-stage transmission is provided on a crankshaft and an end part, protruding to a lateral side relative to the drive pulley, of the crankshaft is rotatably supported through a bearing is disclosed in Patent Document 1.

Japanese Patent Laid-Open No. 2004-232805

In the power unit disclosed in Patent Document 1, an annular bearing boss part, the inside of which is opened, of a case cover holds the bearing at the end part of the crankshaft, cooling airflow inlet ports are formed in the outer periphery of the bearing boss part, the drive pulley having blowing vanes is disposed on the inner side (transmission chamber side) of the bearing boss part and the cooling airflow inlet ports, and an air cleaner element is disposed on the outer side.

Since the air cleaner element is disposed on the further outer side of the end part of the crankshaft, the width in the axial direction of the power unit as a whole is large, which has been the case of the enlarged size of the power unit.
In addition, a crankshaft end face, the bearing and the bearing boss part are centrally located while facing the air cleaner element through which a cooling airflow is taken in, so that the flow of the cooling air taken in is hampered. Therefore, it has been difficult to increase the quantity of cooling air introduced through the cooling airflow inlet ports into the transmission chamber.

The present invention has been made in consideration of the just-mentioned point. Accordingly, it is an object of the present invention to provide a power unit in which it is possible to smoothen the flow of cooling air being taken in and thereby to increase the quantity of the cooling air introduced into a transmission chamber.

In order to attain the above object, the invention as set forth in claim 1 provides a power unit including a belt type non-stage transmission provided on a lateral side of a transmission case serving also as a crankcase for rotatably supporting a crankshaft of an internal combustion engine, and a transmission case cover disposed on the transmission case so as to cover the belt type non-stage transmission and thereby to form a transmission chamber, wherein of a drive pulley including a fixed pulley half and a movable pulley half which are provided on the crankshaft of the belt type non-stage transmission, the fixed pulley half on the side of the transmission cover case is provided with a cooling fan; the transmission case cover is formed with an annular bearing part for rotatably supporting an end part of the crankshaft through a bearing; an outer periphery side wall at the outer periphery of the annular bearing part is formed with cooling airflow inlet ports for introducing a cooling airflow into the transmission chamber; and an inner-side side wall on the inner side of the annular bearing part bulges to the outer side in the axial direction to form a bulging wall for covering the end of the crankshaft and the power unit (20) has said bulging wall (24Fb, 24Rb) that is formed with a vent hole (24Fc, 24Rc) communicating with said bearing (43).

The invention as set forth in claim 2 is characterized in that, in the power unit as set forth in claim 1, a filter element is disposed in the outer periphery of the bulging wall.

The invention as set forth in claim 3 is characterized in that, in the power unit as set forth in any one of claims 1 or 2, the cooling airflow inlet ports are bored while leaving a plurality of connecting ribs radially at the outer-side side wall in the outer periphery of the annular bearing part; and one or two of the connecting ribs are formed on a plane containing at least a drive shaft and a driven shaft in the belt type non-stage transmission.

According to the power unit as set forth in claim 1, the inner-side side wall of the annular bearing part, for rotatably supporting the end part of the crankshaft, of the transmission case cover bulges to the outer side in the axial direction to form the bulging wall for covering the end of the crankshaft. Therefore, the bulging wall ensures that the cooling airflow taken in is straightened in the outer periphery of the bulging wall to be smoothly guided to the cooling airflow inlet ports in the outer periphery of the annular bearing part and be introduced into the transmission chamber, which makes it possible to increase the quantity of cooling air guided to the belt type non-stage transmission and to enhance the cooling capability. The bulging wall is formed with the vent hole communicating with the bearing, so that the vent hole can be made small in diameter to prevent its influence on the straightening of the cooling airflow being taken in, and, yet, a rise in the temperature of a lubricating oil for the bearing inside the bulging wall can be suppressed by the action of the vent hole.

According to the power unit as set forth in claim 2, the filter element is disposed in the outer periphery of the bulging wall, so that the bulging in the axial direction of the filter element in relation to the crankshaft end can be minimized, and the width of the power unit in the axial direction can be made smaller.

According to the power unit as set forth in claim 3, the cooling airflow inlet ports are bored while leaving a plurality of connecting ribs radially at the outer-side side wall in the outer periphery of the annular bearing part, and the connecting ribs are formed on a plane containing at least a drive shaft and a driven shaft in the belt type non-stage transmission. Therefore, the annular bearing part for supporting the crankshaft end is supported by the plurality of connecting ribs formed radially while forming the cooling airflow inlet ports in the outer periphery of the annular bearing part, and, particularly, the connecting ribs are formed on the plane containing the drive shaft and the driven shaft in the belt type non-stage transmission. Accordingly, it is possible to secure the rigidity in the front-rear direction of the transmission case cover which receives forces generated through the turning motion of the belt, and to reduce vibrations.
FIG. 1 is a side view of a motor scooter type motorcycle on which a power unit according to an embodiment of the present invention is mounted.
FIG. 2 is an appearance left side view of the power unit.
FIG. 3 is a left side view showing the condition where a front-side side cover and a rear-side side cover constituting a left-side armor cover of the power unit are detached.
FIG. 4 is a left side view showing the condition where a transmission case cover is further detached from the power unit.
FIG. 5 is a right side view showing, in a partly omitted form, the condition where a reduction gear cover is detached from the power unit.
FIG. 6 is a sectional view taken along line VI-VI of FIG. 2 and developed.
FIG. 7 is an enlarged view of a part of FIG. 6.
FIG. 8 is a left side view of the transmission case cover 24.
FIG. 9 is a right side view of the same.
FIG. 10 is a sectional view taken along line X-X of FIG. 8.
FIG. 11 is a sectional view taken along line XI-XI of FIG. 8.
FIG. 12 is a left side view of a front-side side cover.
FIG. 13 is a right side view of the same.
FIG. 14 is a left side view of a rear-side side cover.
FIG. 15 is a right side view of the same.
FIG. 16 is a left side view showing the condition where the front-side side cover and the rear-side side cover are laid on each other at an extension part 26E and a recessed part 27D.
FIG. 17 is a sectional view taken along line XVII-XVII of FIG. 16.
FIG. 18 is a perspective view of a substantially rear half part of the power unit.

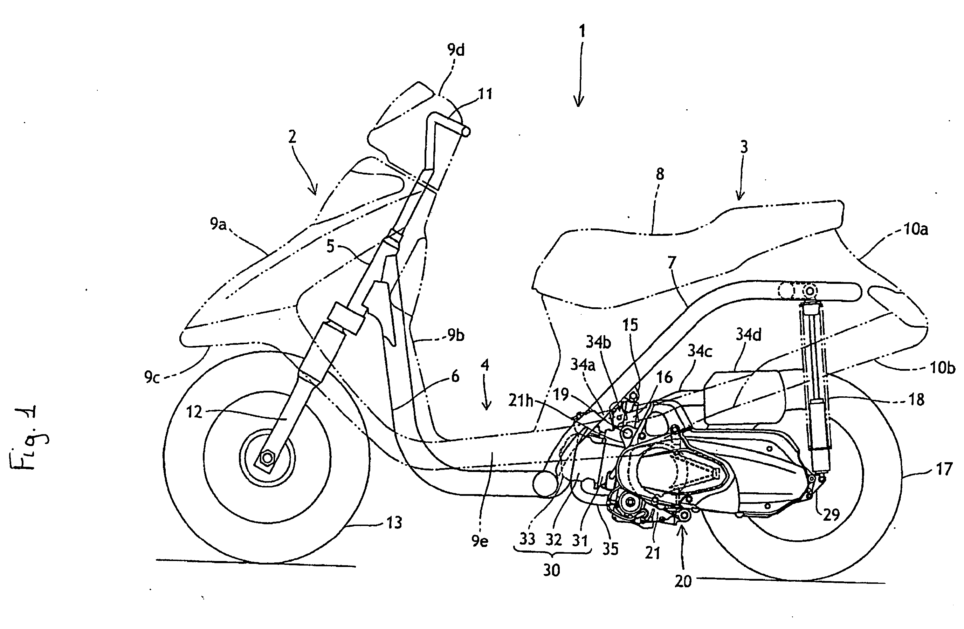

Now, an embodiment of the present invention will be described below, based on FIGS. 1 to 18.
FIG. 1 is a side view of a motor scooter type motorcycle 1 on which a power unit 20 according to an embodiment of the present invention is mounted.
A body front part 2 and a body rear part 3 are connected to each other through a low floor part 4, and a body frame constituting the skeleton of the vehicle consists generally of a down tube 6 and main pipes 7.

Specifically, the down tube 6 extends downwards from a head pipe 5 of the body front part 2, the down tube 6 is bent at its lower ends to be horizontal, then extends rearwoards on the lower side of the floor part 4, and is connected at its rear end with a left-right pair of the main pipes 7. Each of the main pipes 7 rises from the connected part to a rear upper side, and is bent at a predetermined height, to extend rearwards.

The main pipes 7 support a fuel tank and a luggage box, and a seat 8 is disposed on the upper side of the latter.
On the other hand, in the body front part 2, a steering handle 11 is provided on the upper side while being rotatably supported by the head pipe 5, a front fork 12 extends downwards, and a front wheel 13 is rotatably supported on the lower ends of the front fork 12.

Brackets 15 are projectingly provided near the centers of slant parts of the main pipes 7, and a power unit 20 is swingably connected and supported through link members 16 rotatably supported on the brackets 15.

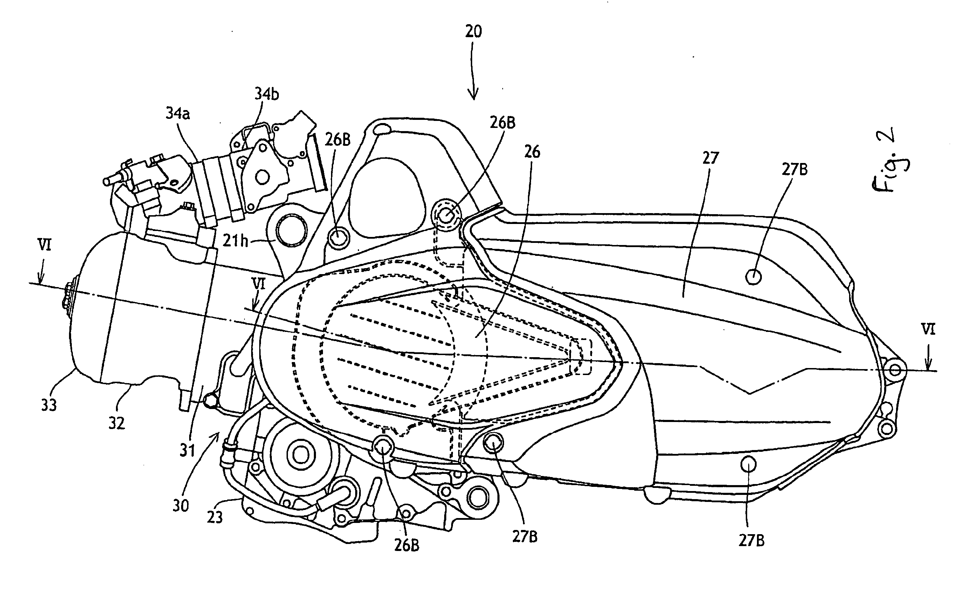

The power unit 20 has a structure in which an internal combustion engine 30 is configured at a front part of a unit case 21, a belt type non-stage transmission 50 is disposed in the range from the internal combustion engine 30 to the rear side, and a reduction gear mechanism 110 is provided integrally with a rear part of the transmission 50, wherein an output shaft of the reduction gear mechanism 110 is a rear axle 114 to which a rear wheel 17 is mounted (see FIG. 2).

In the power unit 20, a left-right pair of power unit hangers 21h, 21h are projected forwards from front upper parts of a front part of the unit case 21, and the power unit hangers 21h, 21h are connected to the lower ends of the link members 16 through a pivot shaft 19, on the other hand, in a swingable rear part, a rear cushion 18 is interposed between a bracket 29 at the rear end of the unit case 21 (transmission case 23) and the main pipe 7 (see FIG. 1).

The internal combustion engine 30 is a single-cylinder 4-stroke-cycle internal combustion engine, wherein a cylinder block 31, a cylinder head 32 and a cylinder head cover 33 are disposed on each other sequentially from the front surface of the unit case 21 and are projected in the posture of being largely inclined to be substantially horizontal.

A throttle body 34b is connected to an intake pipe 34a bent rearwards after extended upwards from an intake port on the upper side in the cylinder head 32, and a connecting tube 34c extended rearwards from the throttle body 34b is connected to an air cleaner 34d disposed at a rear half part of the unit case 21 along the left side of the rear wheel 17.
In addition, an exhaust pipe 35 bent rearwards after extended downwards from an exhaust port on the lower side in the cylinder head 32 is extended rearwards through a position deviated to the right side, to be connected to a muffler (not shown) disposed on the right side of the rear wheel 17.

The body front part 2 is covered with a front cover 9a and a rear cover 9b on the front and rear sides, and with a front lower cover 9c on the left and right sides, and a central part of the steering handle 11 is covered with a handle cover 9d.
The floor part 4 is covered with side covers 9e, and the body rear part 3 is covered with a body cover 10a and tail side covers 10b on the left and right sides.

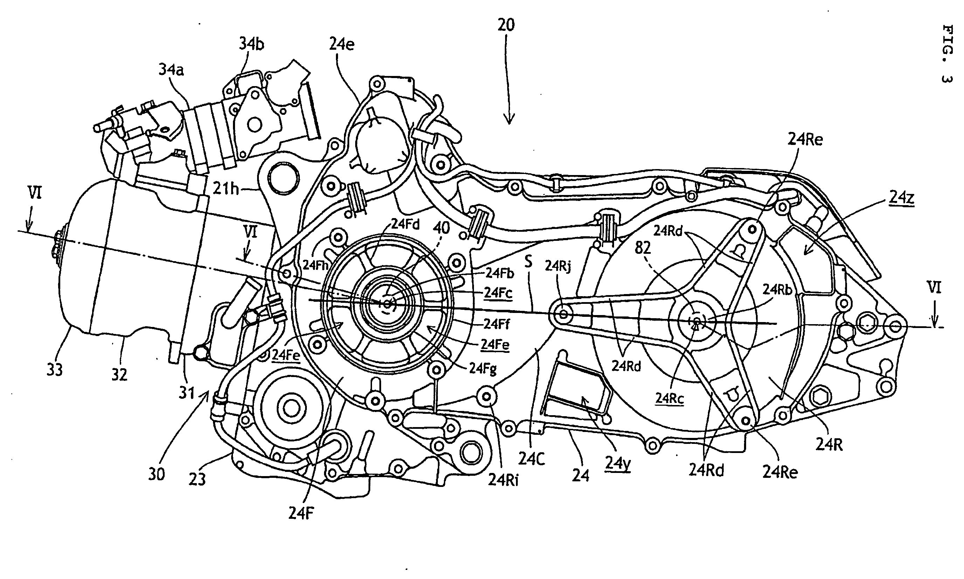

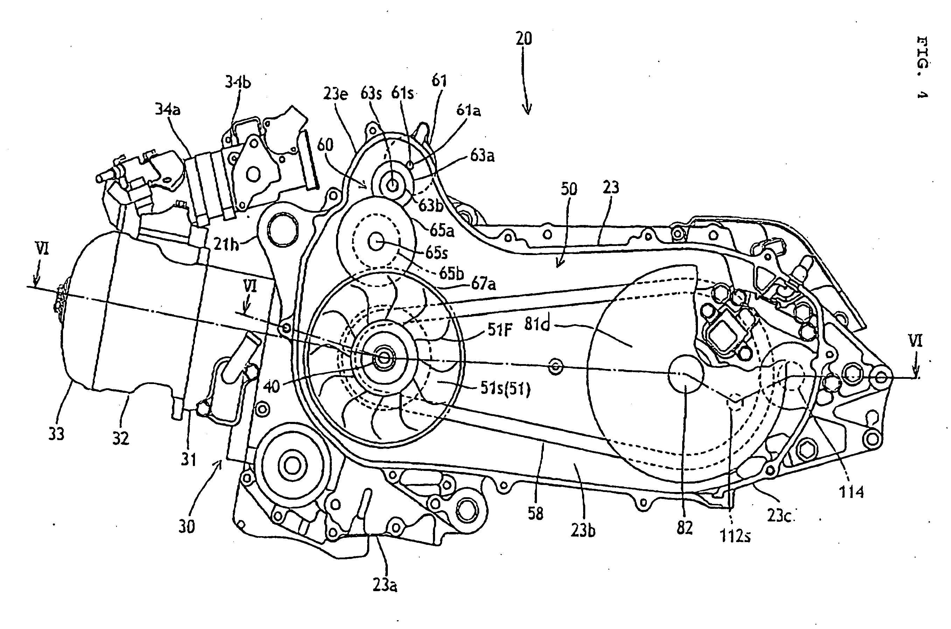

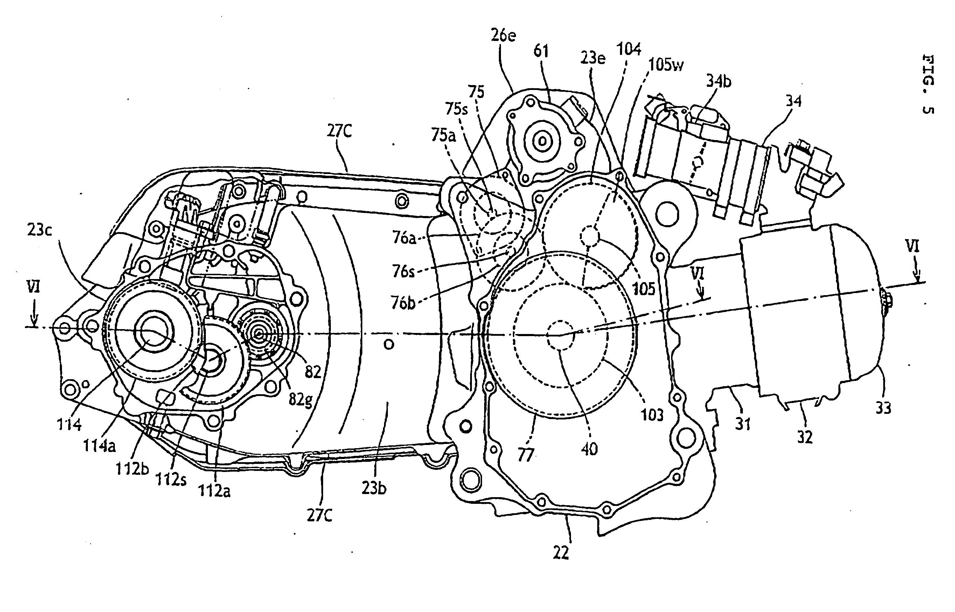

FIG. 2 is an appearance left side view of the power unit 20, FIG. 3 is a left side view showing the condition where a front-side side cover 26 and a rear-side side cover 27 constituting a left side armor cover for the power unit 20 are detached, FIG. 4 is a left side view showing the condition wherein a transmission case cover 24 is further detached from the power unit 20, and FIG. 5 is a right side view showing, in a partly omitted form, the condition where a reduction gear cover 25 is detached from the power unit 20.

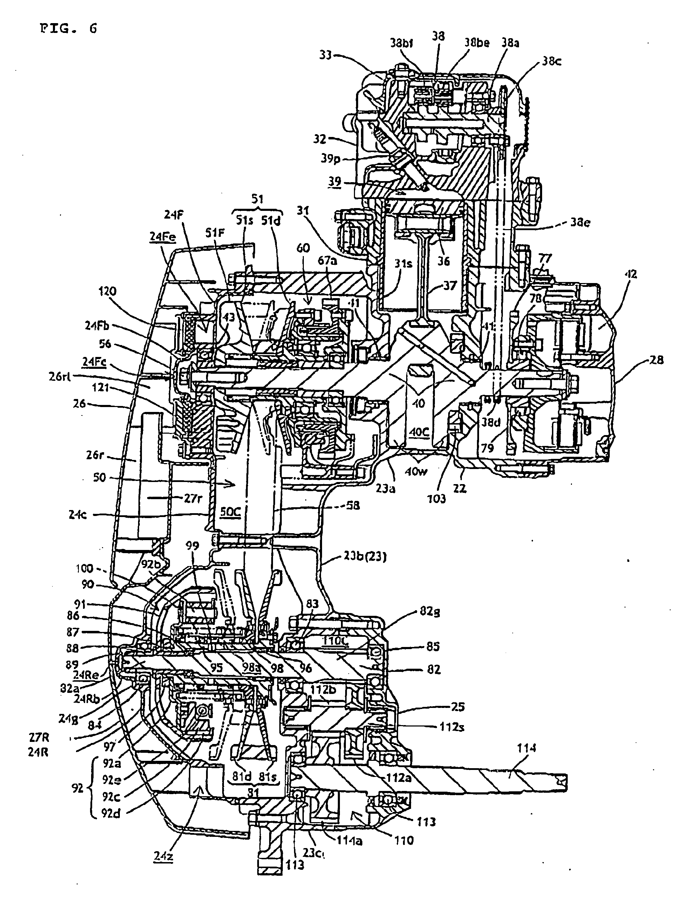

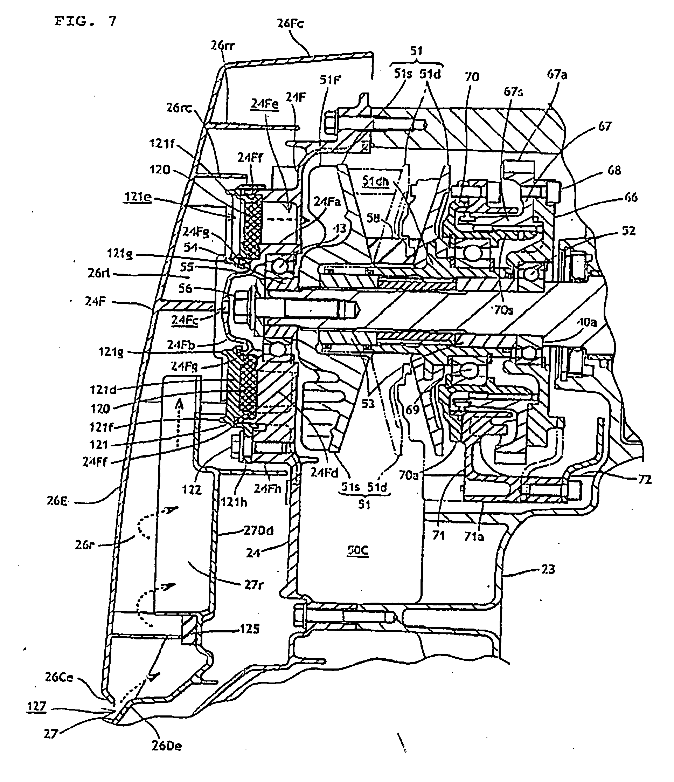

FIG. 6 is a sectional view, in a developed form, taken along line VI-VI of FIG. 2, and FIG. 7 is an enlarged view of a part of FIG. 6.

Referring mainly to FIG. 6, the unit case 21 is split into left and right parts, and a left unit case is extended rearwards relative to a right unit case to constitute the transmission case 23.
The transmission case 23 is comprised of a left crankcase part 23a formed on the right side of a front part, a transmission case part 23b formed on the left side over the range from a front part to a rear part, and a reduction gear part 23c formed on the right side of a rear part. The left crankcase part 23a at the front part is mated to the right unit case 22 to constitute a crank chamber 40C for containing a crankshaft 40, the transmission case part 23b is covered with the transmission case cover 24 on the left side to constitute a transmission chamber 50C for containing the belt type non-stage transmission 50, and the reduction gear part 23c at the rear part is covered with a reduction gear cover 25 to constitute a reduction gear chamber 110C for containing the reduction gear mechanism 110.

A cylinder sleeve 31s formed inside the cylinder block 31 is projected into the inside of the crank chamber 40C, and reciprocation of a piston 36 slidably fitted in the cylinder sleeve 31s is transmitted through a connecting rod 37 to the crankshaft 40 rotatably supported on the unit case 21 while being oriented in the left-right horizontal direction, whereby the crankshaft 40 is rotated.

An intake rocker arm 38bi and an exhaust rocker arm 38be are in swingable contact with a camshaft 38a of a valve-operating mechanism 38 provided in the cylinder head 32 inclined forwards to be nearly horizontal, and an intake valve (not shown) and an exhaust valve (not shown) are driven to open and close by the intake rocker arm 38bi and the exhaust rocker arm 38be.
A timing chain 38e is wrapped around a driven sprocket 38c mounted to a right end part of the cam shaft 38a and a drive sprocket 38d mounted to the crankshaft 40, whereby the camshaft 38a is rotated at a rate of 1/2 times that of the crankshaft 40 (at a reduction ratio of 1/2).
In addition, the cylinder head 32 is equipped with a spark plug 39p having an electrode exposed to the inside of a combustion chamber 39 defined by a ceiling surface opposed to the top face of the piston 36.

In the crank chamber 40C, a left-right pair of crank webs 40w, 40w are contained with the crankshaft 40 rotatably supported on left and right circular bearing holes of the unit case 21 through main bearings 41, 41. Of extension parts extending in the left-right horizontal direction, the right extension part is equipped with an AC generator 42, and the left extension part is equipped with a drive pulley 51 of the belt type non-stage transmission 50 together with a transmission drive mechanism 60.
The AC generator 43 is covered with a generator cover 28 on the right side.

Referring to FIG. 7, the left end of the crankshaft 40 is rotatably supported on an annular bearing part 24Fa of the transmission case cover 24 through a bearing 43, with a collar 54 therebetween.
The drive pulley 51 is composed of a fixed pulley half 51s and a movable pulley half 51d.

The crankshaft 40 is fitted, on its part ranging from a step part 40a (reduced in diameter) to the left extension part, with a bearing 52, a guide sleeve 53, the fixed pulley half 51s, and the collar 54 in this order from the right side, and a bolt 56 is fastened to the left end face of the crankshaft 40 through a washer 55 therebetween, whereby an inner ring of the bearing 52, the guide sleeve 53, a base part of the fixed pulley half 51s, and the collar 54 are integrally fastened to the crankshaft 40.

Therefore, the fixed pulley half 51s is integrally fixed to the crankshaft 40 while being clamped between the guide sleeve 53 and the collar 54, and is rotated as one body with the crankshaft 40.
Incidentally, a cooling fan 51F is projectingly formed on a back surface (left side surface) of the fixed pulley half 51s.

On the other hand, the movable pulley half 51d located on the face side of and opposed to the fixed pulley half 51s is so arranged that a cylindrical movable pulley hub 51dh constituting a base part thereof is partly in spline fit on the guide sleeve 53 to be rotated together with the crankshaft 40 and to be slidable in the axial direction.

Thus, the movable pulley half 51d on the right side which faces the fixed pulley half 51s on the left side is rotated together with the crankshaft 40 and can be slid in the axial direction toward and away from the fixed pulley half 51s, and a V-belt 58 is wrapped between opposed taper surfaces of the pulley halves 51s and 51d.

Referring to FIGS. 4 and 6, the transmission case 23 has a structure in which its part on the rear side relative to the power unit hanger 21h in the transmission case part 23b formed on the left side relative to the left crankcase 23a formed on the right side of a front part is largely bulging to the upper side, and a transmission electric motor 61 as a drive source of the transmission drive mechanism 60 mounted to an upper part of the bulging part 23e from the right side.

A gear cover member (not shown) is partly mounted to the bulging part 23e of the transmission case 23 from the left side, a first reduction gear shaft 63s and a second reduction gear shaft 65s are rotatably supported between the gear cover member and a wall surface of the transmission case 23, a drive gear 61a formed on a drive shaft 61s of the transmission electric motor 61 is meshed with a large diameter gear 63a on the first reduction gear shaft 63s, and a small diameter gear 63b on the first reduction gear shaft 63s is meshed with a large diameter gear 65a on the second reduction gear shaft 65s (see FIG. 4).

On the other hand, a female screw member 67 is firmly attached, by bolts 68, to a circular disk-shaped boss member 66 supported at its base end part on an outer ring of the bearing 52 secured onto the crankshaft 40, a flange part of the female screw member 67 is formed with a large diameter gear 67a, and the large diameter gear 67a is meshed with a small diameter gear 65b on the second reduction gear shaft 65s.
A cylindrical part 67s of the female screw member 67 is formed with a female screw (screw threads) in its inner peripheral surface.

A male screw member 70 is supported through a bearing 69 secured on the outer periphery of the movable pulley hub 51dh slidable in the axial direction while supporting the movable pulley half 51d, a cylindrical part 70s of the male screw member 70 is disposed inside the cylindrical part 67s of the female screw member 67, and a male screw formed in the outer peripheral surface of the cylindrical part 70s is meshed with the female screw formed in the inner peripheral surface of the cylindrical part 67s.
The male screw member 70 is so disposed that the left end of the cylindrical part 70s thereof is exposed on the left side relative to a left opening end of the cylindrical part 67s of the female screw member 67, and a flange part 70a is extended from the left end in the centrifugal direction along the back surface of the movable pulley half 51d.

An annular member 71 is securely attached to an outer peripheral part of the flange part 70a of the male screw member 70, a rear part of the annular member 71 is extended rearwards and then rightwards in the axial direction so as to come around to the outside of the large diameter gear 67a of the female screw member 67, rotation of the extension part 71a is restricted in the manner of clamping the extension part 71a between an upper-lower pair of guide pieces 72, 72 projected into the transmission chamber 50C of the transmission case 23, and, at the same time, movement of the extension part 71a in the axial direction is guided (see FIG. 7).

Therefore, the male screw 70 supported through a bearing 69 on the movable pulley half 51dh integral with the movable pulley half 51d can only be slid in the axial direction while being restricted in rotation by the guide pieces 72, 72.

In the transmission drive mechanism 60 configured as above, when the transmission electric motor 61 is driven and the drive gear 61a formed on the drive shaft 61s is rotated, the large diameter gear 63a on the first reduction gear shaft 61s meshed with the drive gear 61a is rotated together with the small diameter gear 63b with a speed reduction, the large diameter gear 65a on the second reduction gear shaft 65s meshed with the small diameter gear 63b is rotated together with the small diameter gear 65b with a further speed reduction, the large diameter gear 67a of the female screw member 67 meshed with the small diameter gear 65b is rotated with a yet further speed reduction, and the female screw member 67 is rotated.

With the female screw member 67 rotated, the male screw member 70 in screw engagement therewith is moved in the axial direction by the screw mechanism, since its rotation is restricted.
The movement of the male screw member 70 in the axial direction causes, through the bearing 69, the movable pulley hub 51dh to move in the axial direction as one body with the movable pulley half 51d, whereby the movable pulley half 51d can be moved toward and away from the fixed pulley half 51s.

Incidentally, the movable pulley half 51d is moved while rotating together with the crankshaft 40, since the movable pulley hub 51dh integrally supporting the movable pulley half 51d is in spline fit on the guide sleeve 53 which is integral with the crankshaft 40.

Thus, the movable pulley half 51d is moved toward and away from the fixed pulley half 51s by the driving of the transmission electric motor 61 for normal and reverse rotation, whereby the wrapping radius of the V-belt 58 wrapped between the opposed taper surfaces of the pulley halves 51s and 51d is changed, resulting in non-stage transmission.

A starter motor 75 is disposed on a rear lower side of the transmission electric motor 61 mounted to the bulging part 23e of the transmission case part 23b from the right side, the starter motor 75 being mounted to the right crankcase 22.
The starter motor 75 is mounted from the left side onto a left side surface of the bulging part 22e, which is bulging toward a right and somewhat rear side of the right crankcase 22, in such a posture that its drive shaft 75s is set in parallel to the left-right direction, like the transmission electric motor 61 (see FIG. 5).

Referring to FIG. 5, which is a right side view, a reduction gear shaft 76s is rotatably supported between the drive shaft 75s of the starter motor 75 and the crankshaft 40, and a large diameter gear 76a integral with the reduction gear shaft 76s is meshed with a drive gear 75a formed on the drive shaft 75s.
On the other hand, adjacent to the AC generator 42 provided at the right end of the crankshaft 40, a driven gear 77 is fittingly supported on a rotary boss 78 rotatably supported on the crankshaft 40 (see FIG. 6), and the driven gear 77 is meshed with a small diameter gear 76b integral with the reduction gear shaft 76s.

Incidentally, a one-way clutch 79 is interposed between an outer rotor 42r, integral with the crankshaft 40, of the AC generator 42 and the rotary boss 78.
Therefore, when the starter motor 75 is driven and the drive gear 75a formed on the drive shaft 75s is rotated, the large diameter gear 76a on the reduction gear shaft 76s meshed with the drive gear 75a is rotated together with the small diameter gear 76b with a speed reduction, the driven gear 77 meshed with the small diameter gear 76b is rotated together with the rotary boss 78 with a further speed reduction, and the rotation of the rotary boss 78 causes, through the one-way clutch 79, the outer rotor 42r of the AC generator 42 to rotate with the crankshaft 40, whereby starting of the internal combustion engine 30 can be achieved.

In addition, referring to FIG. 5, a balancer shaft 105 is rotatably supported on the upper side of the crankshaft 40 so that a balancer weight 105w rotates between the left and right crank webs 40w, 40w, and a balancer driven gear 104 secured on the balancer shaft 105 is meshed with a balancer drive gear 103 secured on the crankshaft 40.
Therefore, by the balancer weight 105w which is rotated by and synchronously with the rotation of the crankshaft 40, vibrations attendant on the operation of the internal combustion engine 30 are suppressed.

Now, the structure of a rear part of the power unit will be described below.
Referring to FIG. 6, a driven pulley 81 corresponding to the drive pulley 51 in the belt type non-stage transmission 50 is composed of a fixed pulley half 81s and a movable pulley half 81d, which are opposed to each other and are both supported on a driven shaft 82.
The driven shaft 82 is rotatably supported at three portions on the transmission case 23, the transmission case cover 24 and the reduction gear cover 25 through bearings 83, 84 and 85, respectively.

Referring to FIG. 6, the driven shaft 82 is provided at its left side part with a small diameter part 82a slightly reduced in outer diameter from a step part, the small diameter part 82a is fitted sequentially with a bearing 86, a support sleeve 87, and a collar 88, and a nut 89 is screw engaged with its end part, to fasten these members integrally.

The above-mentioned bearing 84 is interposed between an annular bearing part 24Ra of the transmission case cover 24 and the collar 88.
A base part of a cup-shaped clutch outer 91 of a centrifugal clutch 90 is firmly attached to the support sleeve 87 so that the clutch outer 91 is rotated as one body with the driven shaft 82.

A cylindrical fixed pulley hub 95 supporting the fixed pulley half 81s is rotatably supported on the outer periphery of a part, covered with the transmission case cover 24 on the right side relative to the clutch outer 91, of the driven shaft 82 so that it can be rotated relative to the driven shaft 82 through the functions of the above-mentioned bearing 86 and a bearing 96 interposed therebetween.

A support plate 92a as a clutch inner 92 of the centrifugal clutch 90 is fixed to the left end of the fixed pulley hub 95 by a nut 97.
A base end part of an arm 92c is rotatably supported on the support plate 92a through a pivotal shaft 92b, and a clutch shoe 92d is firmly attached to the tip of the arm 92c.
The arm 92c is urged by a spring 92e in such a direction that the clutch shoe 92d is urged away from the inner peripheral surface of the clutch outer 91.

A cylindrical movable pulley hub 98 supporting the movable pulley half 81d is axially slidably provided on the outer periphery of a cylindrical fixed pulley hub 95 supporting the clutch inner 92.
More specifically, the cylindrical movable pulley hub 98 is formed with a guide hole 98a which is elongate along the axial direction, and a guide pin 99 projectingly provided on the fixed pulley hub 95 is slidably engaged with the guide hole 98a.

Therefore, rotation of the movable pulley hub 98 relative to the fixed pulley hub 95 is restricted by the guide pin 99, and the movable pulley hub 98 can be slid in the axial direction on the fixed pulley hub 95 while being guided by the guide hole 98a.
A coil spring 100 is interposed between the support plate 92a attached integrally to the fixed pulley hub 95 and the movable pulley hub 98, and the movable pulley hub 98 is urged rightwards by the coil spring 100.

With this configuration, the movable pulley half 81d supported by the movable pulley hub 98 is rotated together with the fixed pulley half 81s supported by the fixed pulley hub 95, can be slid in the axial direction, and is urged by the coil spring 100 in the direction of coming close to the fixed pulley half 81s.

A V-belt 58 is wrapped between opposed taper surfaces of the fixed pulley half 81s and the movable pulley half 98 configured as above, and the wrapping radius on the driven pulley 81 is varied in conjunction with the wrapping radius on the drive pulley 51 side, in an inverse proportional relationship, whereby non-stage transmission is performed.

When the rotating speed of the drive pulley 51 exceeds a predetermined rotating sped, the clutch shoe 92d of the clutch inner 92 of the centrifugal clutch 90 is brought into contact with the inner peripheral surface of the outer clutch 91, to be rotated integrally with the latter, thereby transmitting motive power to the driven shaft 82.

A rear part of the transmission case 23 is covered on the right side by the reduction gear cover 25, to form a reduction gear chamber 110C for containing a reduction gear mechanism 110.
As shown in FIG. 4, both ends of a reduction gear shaft 112s are rotatably supported between a rear part of the transmission case 23 and the reduction gear cover 25 (which are opposed to each other) through bearings 111, 111, and a large diameter gear 112a integral with the reduction gear shaft 112s is meshed with the small diameter gear 82g formed on the driven gear 82.

Similarly, a rear axle 114 is rotatably supported on a rear part of the transmission case 23 and the reduction gear cover 25 through bearings 113, 113, the rear axle 114 protrudes rightwards from the bearing 113 on the right side, and a large diameter gear 114a integrally secured on the rear axle 114 is meshed with a small diameter gear 112b integral with the reduction gear shaft 112s.

The rear wheel 17 is secured on a part, protruding to the right side relative to the reduction gear cover 25, of the rear axle 114.
Therefore, the rotation of the driven shaft 82 is transmitted to the rear axle 114 with a speed reduction through the reduction gear mechanism 110, whereby the rear wheel 17 is rotated.

In a power transmission mechanism of the power unit 20 as above, a configuration for introducing a cooling airflow into the transmission chamber 50C defined by the transmission case 23 and the transmission case cover 24 so as to cool the belt type non-stage transmission 50 is provided at a front part of the transmission case cover 24.

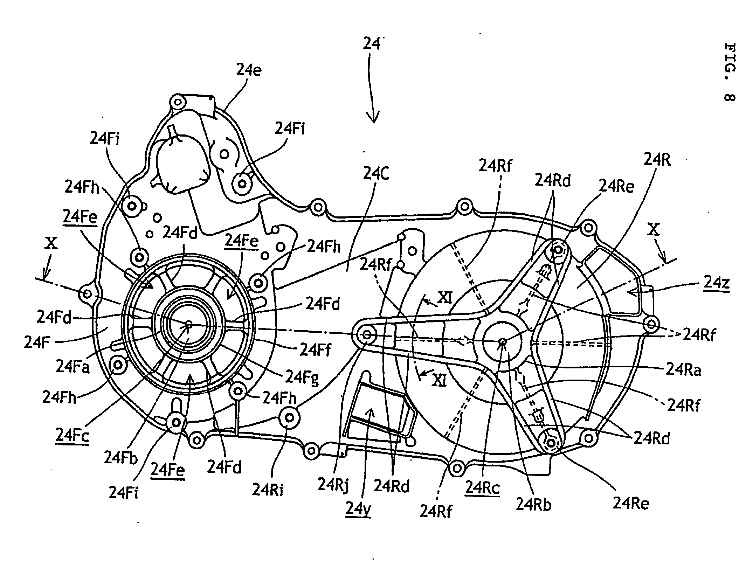

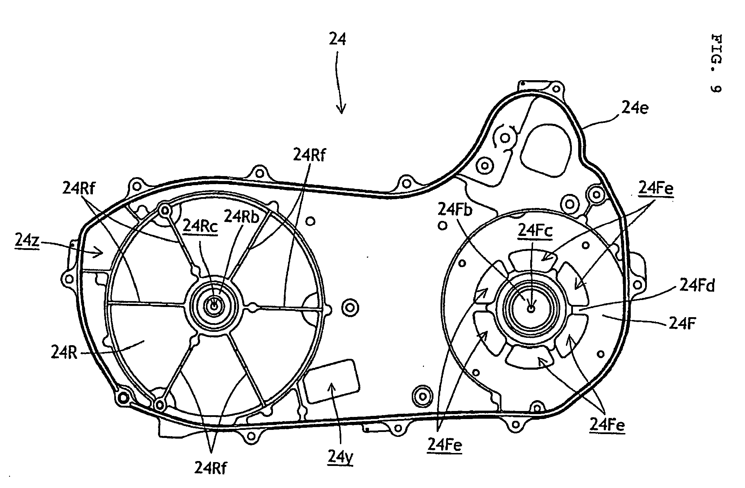

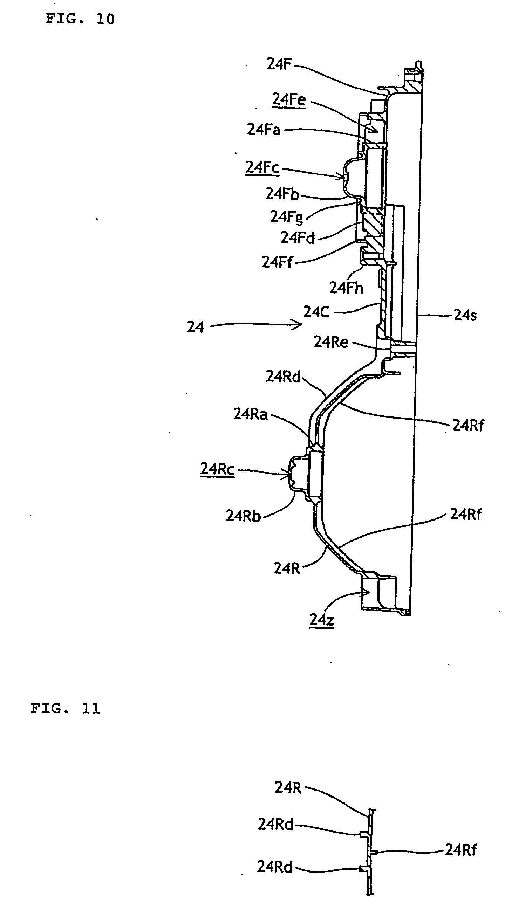

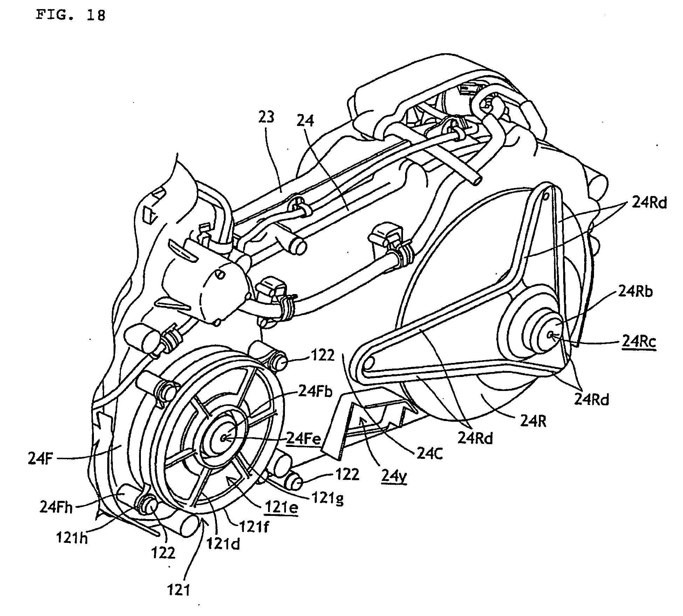

A left side (outside) view of the transmission case cover 24 is shown in FIG. 8, a right side (inside) view of the same is shown in FIG. 9, a sectional view of the same is shown in FIG. 10, and a sectional view taken along line XI-XI of FIG. 8 is shown in FIG. 11.
Incidentally, FIG. 18 showing a substantially rear half part of the power unit 20 shows the transmission case cover 24 together with the transmission case 23 in perspective view.

A part, ranging to a front part from a mating surface 24s for mating to the transmission case 23, of the transmission case cover 24 is slightly bulging to the left side (outside) in a roughly circular flat plate-like shape to form a circular wall part 24F, and a rear half part of the transmission case cover 24 is largely bulging in a dome shape to form a dome wall 24R (see FIGS. 10 and 18).
The circular wall part 24F on the front side covers the driven pulley 51, while the dome wall 24R on the rear side surroundingly contains and covers the centrifugal clutch 90.

Incidentally, the transmission case cover 24 is provided with a flat connecting wall 24C (see FIGS. 10 and 18) between the outwardly bulging circular wall part 24F and the dome wall 24R, and is provided on the upper side of the front circular wall part 24F with a bulging part 24e opposed to the bulging part 23e of the transmission case 23.

The circular wall part 24F is provided at its central part with the above-mentioned annular bearing part 24Fa for supporting the left end of the crankshaft 40 through the bearing 43, and the dome wall 24R is provided at its apex part with the above-mentioned annular bearing part 24Ra for supporting the left end of the driven shaft 82 through the bearing 84.

The annular bearing part 24Fa at the central part of the circular wall part 24F has a structure in which an inner-side side part thereof bulges to the outside in the axial direction to form a small cup-shaped bulging wall 24Fb for covering the end of the crankshaft 40, and a small diameter vent hole 24Fc is bored in the center of the bulging wall 24Fb.
Similarly, the annular bearing part 24Ra at the central part of the dome wall 24R has a structure in which an inner-side side wall thereof bulges to the outside in the axial direction to form a small cup-shaped bulging wall 24Rb for covering an end of the crankshaft 40, and a small diameter vent hole 24Rc is bored in the center of the bulging wall 24Rb.

The circular wall part 24F at the outer periphery of the annular bearing part 24Fa on the front side is provided therein with six sector-shaped cooling airflow inlet ports 24Fe, leaving six connecting ribs 24Fd radially.
In other words, the annular bearing part 24Fa is supported by the six connecting ribs 24Fd.
The cooling airflow inlet ports 24Fe formed in the outer periphery of the annular bearing part 24Fa are openings (ports) for introducing a cooling airflow into the transmission chamber 50C.

Two of the six connecting ribs 24Fd are located on a straight line passing through the front and rear vent holes 24Fc, 24Rc in side view.
In other words, the front and rear two connecting ribs 24Fd are formed on a plane S containing the crankshaft 40, which is the drive shaft of the belt type non-stage transmission 50, and the driven shaft 82 (see FIG. 3).
Therefore, it is possible to secure the rigidity in the front-rear direction of the transmission case cover 24 receiving the forces generated due to the turning motion of the V-belt 58, and to reduce vibrations.

Along the outer peripheral edges and the inner peripheral edges of the six sector-shaped cooling airflow inlet ports 24Fe, an annular outer ring projected part 24Ff and an annular inner ring projected part 24Fg are projected slightly to the left side.
The outer ring projected part 24Ff and the inner ring projected part 24Fg are located in the outer periphery of the bulging wall 24Fb.
Four holder attaching bosses 24Fh for attaching a filter holder 121 are formed in the outer periphery of the outer ring projected part 24Ff.
Incidentally, cover attaching bosses 24Fi are formed at a total of three portions, i.e., front and rear two portions and one lower portion, on the upper side of the circular wall part 24F.

On the other hand, at the dome wall 24R in the outer periphery of the annular bearing part 24Ra on the rear side, three U-shaped outside ribs 24Rd are extended on the left side surface (outside surface), each in a U shape radially from the annular bearing part 24Ra.
More specifically, each of the U-shaped outside ribs 24Rd has a U shape in which a pair of substantially parallel side edges are extended in a centrifugal direction from the annular bearing part 24Ra and their tips are curved and connected to each other.
The three U-shaped outside ribs 24Rd are at regular angular intervals, and base end parts of the adjacent U-shaped outside ribs 24Rd are connected to each other at the annular bearing part 24Ra.

One of the U-shaped outside ribs 24Rd is extended forwards from the annular bearing part 24Ra substantially in parallel to a straight line passing through the front and rear vent holes 24Fc and 24Rc in side view, and a curved part at its tip reaching the center of the transmission case cover 24 is formed with a cover attaching boss 24Rj for attaching the transmission case cover 24 to the transmission case 23 (see FIG. 8).

The pair of side edges of the U-shaped outside rib 24Rd extended forwards are formed to be substantially parallel to, and at substantially equal distances from, a plane S containing the drive shaft (crankshaft 40) and the driven shaft 82 of the belt type non-stage transmission 50.
Therefore, the rigidity in the front-rear direction of the dome wall 24R of the transmission case cover 24 is particularly high, and vibrations generated in the front-rear direction due to the turning motion of the V-belt 58 in the belt type non-stage transmission 50 can be restrained more effectively.

The other two U-shaped outside ribs 24Rd are extended toward rear upper and lower sides from the annular bearing part 24Ra, each at an angle of about 120 degrees relative to the U-shaped outside rib 24Rd extending in the front-rear direction, and curved parts at their tips are formed with cover attaching bosses 24Re, respectively.
Therefore, the rigidity of the dome wall 24R as a whole can be efficiently enhanced by the small number of ribs.
Incidentally, the connecting wall 24C is formed with a cover attaching boss 24Ri at one portion of a lower part thereof.

In addition, on the right side surface (inside surface) of the dome wall 24R, six inside ribs Rf are formed radially from the annular bearing part 24Ra provided at the center.
The six inside ribs 24Rf are formed at regular angular intervals around the annular bearing part 24Ra, and the two inside ribs 24Rf extending in the front-rear direction are located on a straight line passing through the front and rear vent holes 24Fc, 24Rc in side view.
Therefore, the three of the six inside ribs 24Rf are substantially parallel respectively to the three U-shaped outside ribs 24Rd on the outside surface, and the inside ribs 24Rf are located between, and not overlapping with, the side edge ribs of the U shape of the U-shaped outside ribs 24Rd.

Thus, the dome wall 24R on the rear side of the transmission case cover 24 is provided on its outside surface with the three U-shaped outside ribs 24Rd projected and extended radially, and is provided on its inside surface with the six inside ribs 24Rf projected and extended radially. Therefore, the rigidity of the dome wall 24R is remarkably enhanced by the synergistic effect of the U-shaped outside ribs 24Rd and the inside ribs 24Rf, so that vibrations of the dome wall 24R can be restrained by the small numbers of simple ribs.

Incidentally, the dome wall 24R of the transmission case cover 24 is provided with a cooling airflow inlet passage 24y in a lower part at the center in the front-rear direction thereof, and is provided with a cooling airflow inlet passage 24z in a rear upper part thereof.

The condition where the transmission case cover 24 as above-described is coveringly disposed on the transmission case 23 so as to cover the belt type non-stage transmission 50 is shown in FIG. 3.
A hollow circular plate-like filter element 120 is fitted in an annular part, provided with the six cooling airflow inlet ports 24Fe, between the outer ring projected part 24Ff and the inner ring projected part 24Fg of the circular wall part 24F on the front side of the transmission case cover 24, and the filter element 120 is attached to the cooling airflow inlet ports 24Fe in the state of being pressed by the filter holder 121 from the outside.

The filter holder 121 is composed generally of an outer ring part 121f and an inner ring part 121g secured respectively to the outer ring projected part 24Ff and the inner ring projected part 24Fg of the transmission case cover 24, and six connecting ribs 121d extending radially from the inner ring part 121g and connected to the outer ring part 121f, and bolt boss parts 121h are extended radially from four portions of the outer ring part 121f.

Of the filter holder 121, the six connecting ribs 121d are opposed respectively to the six connecting ribs 24Fd of the transmission case cover 24; therefore, the filter holder 121 is provided with cooling airflow inlet ports 121e correspondingly to the six sector-shaped cooling airflow inlet ports 24Fe in the transmission case cover 24.

In installing the filter holder 121, the outer ring part 121f and the inner ring part 121g of the filter holder 121 are fittingly connected respectively to the outer ring projected part 24Ff and the inner ring projected part 24Fg of the transmission case cover 24, the six connecting ribs 24Fd of the filter holder 121 are set for pressing toward the six connecting ribs 24Fd on the transmission case cover 24 side so as to clamp the filter element 120 therebetween, the bolt boss parts 121h are put on the holder attaching bosses Fh provided at four portions in the outer periphery, and they are fastened by bolts 122.

The six cooling airflow inlet ports 121e of the filter holder 121 and the filter element 120 are disposed in the outer periphery of the bulging wall 24Fb bulging from the annular bearing part 24Fa of the transmission case cover 24 so as to cover an end of the crankshaft 40, and the six cooling airflow inlet ports 24Fe of the transmission case cover 24 are formed in the outer periphery of the annular bearing part 24Fa, and, in this structure, the six cooling airflow inlet ports 24Fe are located at positions for facing the cooling fan 51F provided on the back side of the fixed pulley half 51s fixed to the crankshaft 40.

Therefore, the cooling fan 51F rotated as one body with the crankshaft 40 causes the cooling airflow coming from the outside of the filter holder 121 to pass sequentially through the cooling airflow inlet ports 121e, the filter element 120, and the cooling airflow inlet ports 24Fe, to be introduced into the transmission chamber 50C while being filtered.

An inner-side side wall of the annular bearing part 24Fa, rotatably supporting an end part of the crankshaft 40 through the bearing 43, of the transmission case cover 24 bulges to the outside in the axial direction to form the bulging wall 24Fb covering the end of the crankshaft 40. Therefore, due to the presence of the bulging wall 24Fb, the cooling airflow taken in is straightened in the outer periphery of the bulging wall 24Fb to be smoothly guided to the cooling airflow inlet ports 24Fe in the outer periphery of the annular bearing part 24Fa and introduced into the transmission chamber 50C, so that the quantity of cooling air introduced into the belt type non-stage transmission 50 can be increased.
The cooling air introduced into the transmission chamber 50C flows rearwards while cooling the belt type non-stage transmission 50, to be discharged through the cooling airflow outlet passage 24z formed in the rear part of the transmission case cover 24.

A substantially front half part of the transmission case cover 24 is covered with a front-side side cover 26 on the lateral side, and a substantially rear half part of the transmission case cover 24 is covered with the rear-side side cover 27 on the lateral side, so that the cooling airflow inlet ports 121e and 24Fe are covered with the front-side side cover 26.

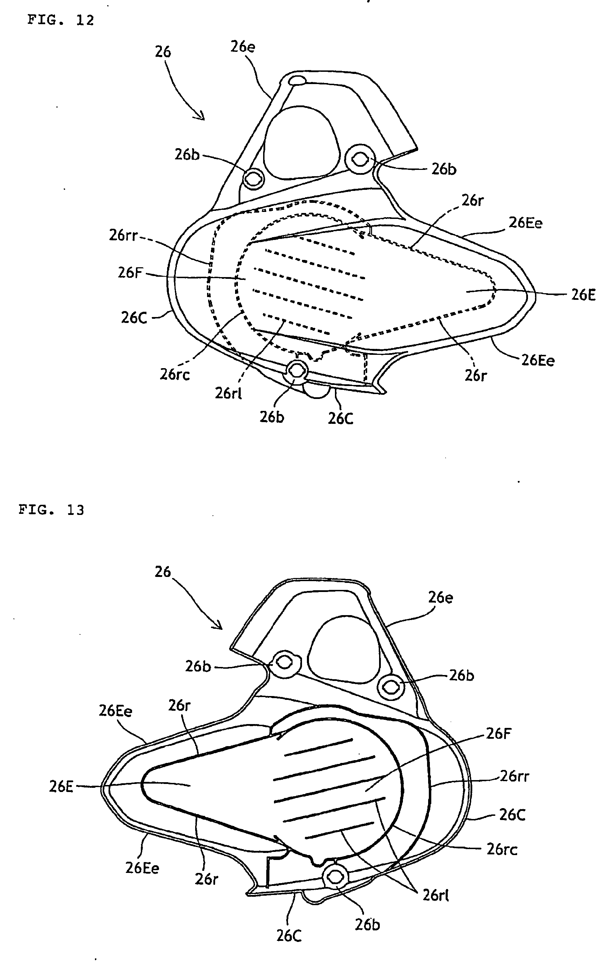

As shown in FIGS. 12 and 13, the front-side side cover 26 constitutes a front-side wall part 26F corresponding to the circular wall part 24F of the transmission case cover 24, and a bulging part 26e bulging correspondingly to the bulging part 24e of the transmission case cover 24 on the upper side of the front-side wall part 26F, and is formed with an extension part 26E extended at an acute angle while being gradually reduced in vertical width on the rear side relative to the front-side wall part 26F.
The front-side wall part 26F covers the front to lower side of the transmission case cover 24 with a peripheral wall 26C (see FIGS. 6 and 7).

Upper and lower side edges 26Ee forming the acute angle of the extension part 26E are slightly bent inwards (rightwards) until they intersect at their rear ends.
Front-side cover ribs 26r are formed to project from the inside surface (right side surface) of the extension part 26E.
As shown in FIG. 13, the front-side cover ribs 26r are formed in an acute-angled tapered overall shape substantially parallel to the upper and lower side edges 26Ee.
The upper and lower front-side cover ribs 26r formed in the tapered overall shape are extended forwards to form an arcuate rib part 26rc connected while forming a large circular arc on the inside of the front-side wall part 26F.

Therefore, the front-side cover ribs 26r form a single closed loop, and the rib arc part 26rc of the front-side wall part 26F is disposed at such a position as to surround the outer periphery of the annular outer ring projected part 24Ff, in which the filter element 120 is fitted, on the front side of the transmission case cover 24.

In addition, on the inside surface of the front-side wall part 26F of the front-side side cover 26, a second front-side cover rib 26rr is projectingly formed so as to further externally surround the rib arc part 26rc, and, on the inner side of the rib arc part 26rc, five parallel rectilinear straightening ribs 26rl are projectingly formed to be slightly inclined forwardly upwards rather than horizontal.
Incidentally, the front-side side cover 26 is provided with attaching boss parts 26b at three portions, i.e., upper front and rear portions and a lower portion of the front-side wall part 26F.

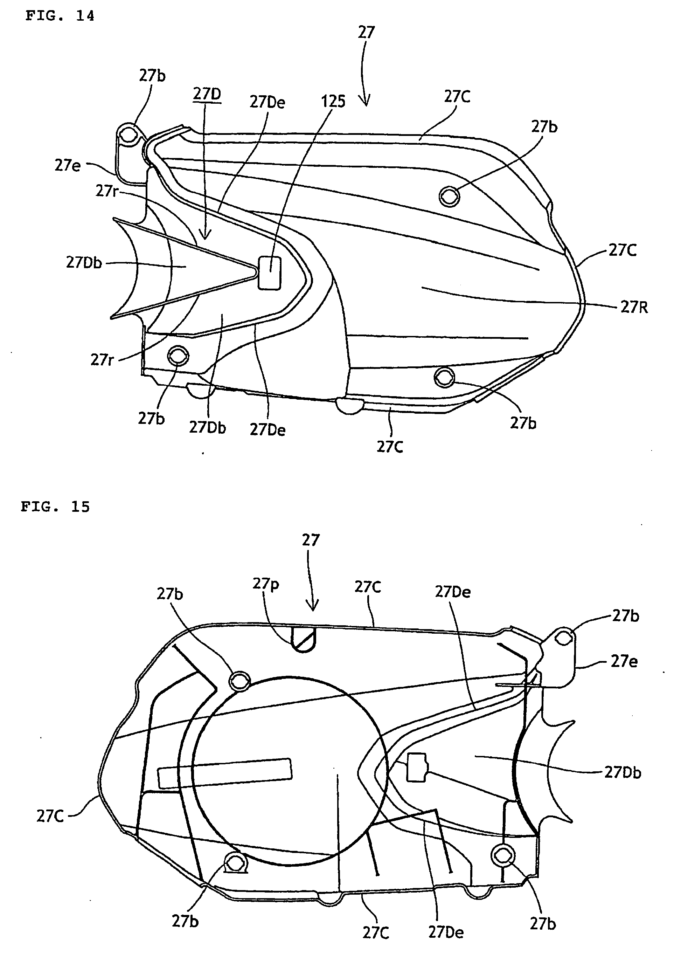

On the other hand, referring to FIGS. 14, 15 and 17 (and further FIG. 6), the rear-side side cover 27 covering the substantially rear half part of the transmission case cover 24 is comprised of a rear-side wall part 27R for covering the lateral sides of the connecting part 24C and the dome wall 24R on the right side thereof of the transmission case cover 24, and a peripheral wall 27C for covering the upper side through the rear side to the lower side of the connecting part 24C and the dome wall 24R on the rear side thereof, and a front part of the rear-side wall part 27R is provided at a central part in the vertical direction thereof with a recessed part 27D which is recessed to the side of the connecting part 24C of the transmission case cover 24.

The recessed part 27D of the rear-side side cover 27 is so formed that bent edges 27De at the boundary of recessing from the rear-side wall part 27R have the same shape (for overlapping) as the upper end lower side edges 26Ee of the extension part 26E, extended rearwards at an acute angle while being gradually reduced in vertical width, of the front-side side cover 26.
Therefore, the recessed part 27D of the rear-side side cover 27 has its upper and lower bent edges 27De extended rearwards at an acute angle while being gradually decreased in vertical width to intersect at their rear ends.

Rear-side cover ribs 27r are formed to project from the outside surface (left side surface) of a bottom wall 27Db of the recessed part 27D.
As shown in FIG. 14, the rear-side cover ribs 27r are formed in an acute-angled tapered overall shape substantially parallel to the upper and lower bent edges 27De.
The upper and lower rear-side cover ribs 27r formed in the tapered overall shape intersect at their rear ends, and their front ends are protruding slightly beyond the front end of the rear-side wall part 27R while opening wider toward the front side.

A rectangular parallelopiped elastic body 125 is attached to the bottom wall 27Db while abutting, from the rear side, on the intersecting rear ends of the upper and lower rear-side cover ribs 27r.
In addition, on the inside surface (right side surface) of the rear-side side cover 27, an opening support part 27p for supporting a tip opening part of a breather pipe is formed at a required position along the peripheral wall 27C on the upper side, in a trough shape opening to the right side and extending leftwards with the peripheral wall 27C as a ceiling surface.

Incidentally, the rear-side side cover 27 is provided with attaching boss parts 27b at four positions, i.e., upper and lower positions in a rear portion of the rear-side wall part 27R, a position on the lower side of the rear-side cover rib 27r of a front portion of the rear-side wall portion 27R, and at a bracket 27e extending slightly forwards beyond a front portion of the rear-side wall part 27R.

The rear-side side cover 27 is put on a side surface of the substantially rear half part of the transmission case cover 24, and the attaching boss parts 27b at three positions consisting of upper and lower position in the rear portion and a front lower position are fastened to the cover attaching bosses 24Ri of the transmission case cover 24 by bolts 27B, whereby the rear-side cover 27 is attached. Thereafter, the front-side side cover 26 is put on a side surface of the substantially front half part of the transmission case cover 24, whereon the rearwardly extended extension part 26E of the transmission case cover 24 is coveringly laid on the recessed part 27D of the rear-side side cover 27, and, in this condition, the attaching boss parts 26b at three positions are fastened to the cover attaching bosses 24Fi of the transmission case cover 24 by bolts 26B, whereby the front-side side cover 26 is attached (see FIG. 2).
Incidentally, the attaching boss part 26b at an upper rear position of the front-side side cover 26 is co-fastened to the cover attaching boss 24Fi of the transmission case cover 24 by a bolt 26B which is used in common for the attaching boss part 27b at an upper front position of the rear-side side cover 27.

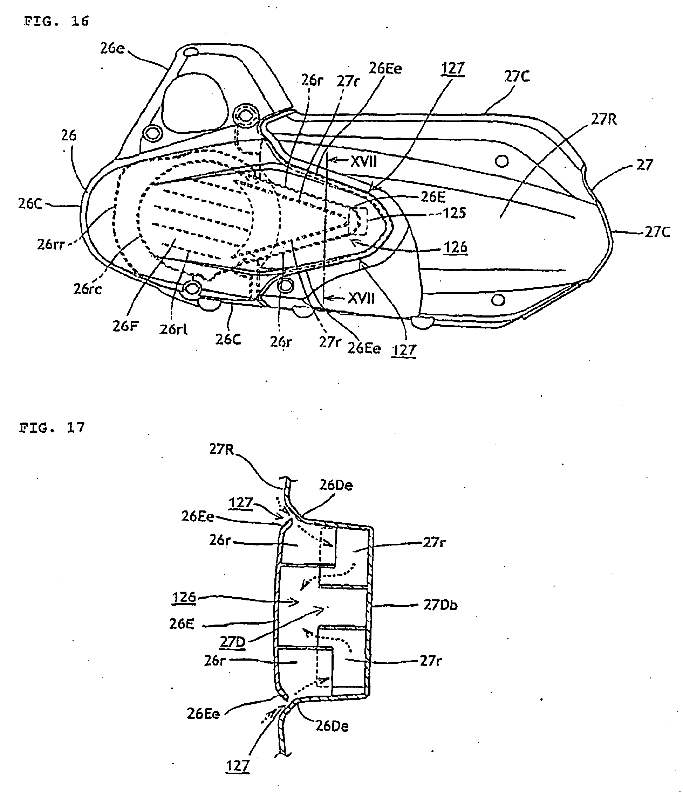

A side view showing the condition where the front-side side cover 26 and the rear-side side cover 27 are laid on each other at the extension part 26E and the recessed part 27D is shown in FIG. 16, and a sectional view of the laid-on essential part is shown in FIG. 17.
A cooling airflow intake passage 126 is formed between the rearwardly extended extension part 26E of the front-side side cover 26 and the recessed part 27D of the rear-side side cover 27 overlapping therewith.

In the cooling airflow intake passage 126, the front-side cover ribs 26r formed in the tapered overall shape of the front-side side cover 26 are substantially parallel to and externally covering the rear-side cover ribs 27r formed in the tapered overall shape of the rear-side side cover 27; therefore, the rear-side cover ribs 27r are disposed on the inner side of and surrounded by the front-side cover ribs 26r forming a closed loop together with the rib arc part 26rc.

The connected part of the intersecting rear ends of the upper and lower front-side cover ribs 26r formed in the tapered overall shape abut on the elastic body 125 attached to the recessed part bottom wall 27Db of the rear-side side cover 27, whereby the front-side cover rib 26r is positioned at a predetermined distance from the recessed part bottom wall 27Db. At the same time, the upper and lower side edges 26Ee of the extension part 26E of the front-side side cover 26 are positioned so as to define cooling airflow intake gaps 127 between themselves and the upper and lower bent edges 27De constituting the recessed part 27D of the rear-side side cover 27 (see FIG. 17).
Similarly, the rear-side side cover 27r is positioned at a predetermined distance from the extension part 26E of the front-side side cover 26 (see FIG. 17).

Therefore, the cooling airflow intake gaps 127 are formed to be elongate along the upper and lower side edges 26Ee, extended rearwards in the tapered overall shape at an acute angle, of the extension part 26E of the front-side side cover 26, and the cooling airflows are taken in through the cooling airflow intake gaps 127 into the cooling airflow intake passage 126 as indicated by broken-line arrows in FIG. 17.
In the cooling airflow intake passage 126, the front-side cover ribs 26r and the rear-side cover ribs 27r are projected to form a labyrinth, so that the cooling air taken in through the cooling airflow intake gaps 127 can flow smoothly into the cooling airflow intake passage 126 while being guided sequentially by the front-side cover ribs 26r and the rear-side cover ribs 27r.

In this manner, the cooling air taken in while being guided by the front-side cover ribs 26r and the rear-side cover ribs 27r in the cooling airflow intake passage 126 flows forwards inside the front-side side cover 26 while being straightened by the straightening ribs 26rl, to reach the lateral side of the filter element 120 disposed at the cooling airflow inlet ports 24Fe of the transmission case cover 24. Therefore, the cooling air is introduced into the transmission chamber 50C through the cooling airflow inlet ports 24Fe after passing through the filter element 120 efficiently.
The cooling air introduced into the transmission chamber 50C flows rearwards while cooling the belt type non-stage transmission 50, to be discharged through the cooling airflow outlet passage 24y in a central lower portion of the transmission case cover 24 and the cooling airflow outlet passage 24z in a rear portion.

Referring to FIG. 7, the fixed pulley half 51s located on the transmission case cover 24 side of the drive pulley 51 provided on the crankshaft 40 of the belt type non-stage transmission 50 is equipped with the cooling fan 51F, and the inner-side side wall of the annular bearing part 21Fa, rotatably supporting an end part of the crankshaft 40 through the bearing 43, of the transmission case cover 24 is bulging to the outside in the axial direction to form the bulging wall 24Fb covering the end of the crankshaft 40. Therefore, by the presence of the bulging wall 24Fb, the cooling air taken in is smoothly guided to the cooling airflow inlet ports 24Fe in the outer periphery of the annular bearing part 24Fa while being straightened in the outer periphery of the bulging wall 24Fb, to be introduced into the transmission chamber 50C, so that the quantity of cooling air introduced into the belt type non-stage transmission 50 can be enlarged, and the cooling capability can be enhanced.

Since the filter element 120 is disposed in the outer periphery of the bulging wall 24Fb, the protrusion of the filter element 120 in the axial direction (leftward direction) relative to the left end of the crankshaft 40 can be minimized, and the width in the axial direction (width in the left-right direction) of the power unit 20 can be made small.

Since the vent hole 24Fc communicating with the bearing 43 is formed in the center of the bulging wall 24Fb, the heat tending to be accumulated inside the bulging wall 24Fb can be released through the vent hole 24Fc, whereby a rise in the temperature of a lubricating oil for the bearing 43 can be suppressed.
The vent hole 24Fc can be configured to have a diameter reduced to a required minimum level for ventilation so that it does not affect the straightening of the cooling airflow being taken in.

The annular bearing part 24Fb supporting the end part of the crankshaft 40 is supported by the six connecting ribs 24Fd formed radially while forming the cooling airflow inlet ports 24Fe in the outer periphery of the annular bearing part 24Fb, and, particularly, the connecting ribs 24Fd are formed on a plane containing the drive shaft (crankshaft 40) and the driven shaft 82 in the belt type non-stage transmission 50, so that it is possible to secure the rigidity in the front-rear direction of the transmission case cover 24 receiving the forces generated due to the turning motion of the V-belt 58, and to reduce vibrations.

20 power unit, 21 unit case, 22 right unit case, 23 transmission case, 24 transmission case cover, 24Fa annular bearing part, 24Fb bulging wall, 24Fc vent hole, 24Fd connecting rib, 24Fe cooling airflow inlet port, 24R dome wall, 24Rb bulging wall, 24Rc vent hole, 24Rd U-shaped outside rib, 24Rf inside rib, 24z cooling airflow outlet passage, 26 front-side side cover, 27 rear-side side cover,
30 internal combustion engine, 40 crankshaft, 41 main bearing, 43 bearing,
50 belt type non-stage transmission, 50C transmission chamber, 51 drive pulley, 51d movable pulley half, 51s fixed pulley half, 51F cooling fan, 58 V-belt, 81 driven pulley, 82 driven shaft, 110 reduction gear mechanism, 114 rear axle,
120 filter element, 121 filter holder.

## Claims

1. A power unit (20) comprising a belt type non-stage transmission (50) provided on a lateral side of a transmission case (23) serving also as a crankcase for rotatably supporting a crankshaft (40) of an internal combustion engine (30), and a transmission case cover (24) disposed on said transmission case (23) so as to cover said belt type non-stage transmission (50) and thereby to form a transmission chamber (50C),
wherein of a drive pulley (51) including a fixed pulley half (51s) and a movable pulley half (51d) which are provided on said crankshaft (40) of said belt type non-stage transmission (50), said fixed pulley half (51s) on the side of said transmission cover case is provided with a cooling fan (51F);
said transmission case cover (24) is formed with an annular bearing part (24Fa) for rotatably supporting an end part of said crankshaft (40) through a bearing (43); and
an outer periphery side wall at the outer periphery of said annular bearing part (24Fa) is formed with cooling airflow inlet ports (24Fe) for introducing a cooling airflow into said transmission chamber (50C);
**characterized in that** an inner-side side wall on the inner side of
said annular bearing part (24Fa) bulges to the outer side in the axial direction to form a bulging wall (24Fb, 24Rb) for covering the end of said crankshaft (40) and
the power unit (20) has said bulging wall (24Fb, 24Rb) that is formed with a vent hole (24Fc, 24Rc) communicating with said bearing (43).

2. The power unit (20) as set forth in claim 1, wherein a filter element (120) is disposed in the outer periphery of said bulging wall (24Fb, 24Rb).

3. The power unit (20) as set forth in any one of claims 1 or 2, wherein said cooling airflow inlet ports (24Fe) are bored while leaving a plurality of connecting ribs (24Fd) radially at said outer-side side wall at the outer periphery of said annular bearing part (24Fa); and
one or two of said connecting ribs (24Fd, 24Rd) are formed on a plane containing at least a drive shaft and a driven shaft (82) in said belt type non-stage transmission (50).

## Patentansprüche

1. Triebwerk (20), umfassend ein stufenloses Getriebe (50) vom Riementyp, das an einer Querseite eines Getriebegehäuses (23) vorgesehen ist, welches auch als Kurbelgehäuse zum drehbaren Tragen einer Kurbelwelle (40) einer Brennkraftmaschine (30) dient, und eine Getriebegehäuseabdeckung (24), die an dem Getriebegehäuse (23) so angeordnet ist, um das stufenlose Getriebe (50) vom Riementyp abzudecken und **dadurch** eine Getriebekammer (50C) zu bilden,
wobei eine Antriebsriemenscheibe (51) eine feste Riemenscheibenhälfte (51s) und eine bewegbare Riemenscheibenhälfte (51d) enthält, welche auf der Kurbelwelle (40) des stufenlosen Getriebes (50) vom Riementyp vorgesehen sind, wobei die feste Riemenscheibenhälfte (51s) auf der Seite des Getriebeabdeckungsgehäuses mit einem Kühlgebläse (51F) versehen ist, wobei die Getriebegehäuseabdeckung (24) mit einem ringförmigen Lagerteil (24Fa) zum drehbaren Tragen eines Endteiles der Kurbelwelle (40) durch ein Lager (43) gebildet ist und wobei eine äußere Umfangsseitenwand am äußeren Umfang des ringförmigen Lagerteiles (24Fa) mit Kühlluftströmungs-Einlassanschlüssen (24Fe) zum Einführen einer Kühlluftströmung in die Getriebekammer (50C) gebildet ist,
**dadurch gekennzeichnet,**
**dass** eine innenseitige Seitenwand sich in der Innenseite des ringförmigen Lagerteiles (24Fa) zur äußeren Seite in der axialen Richtung aufwölbt, um eine Aufwölbungswand (24Fb, 24Rb) zum Abdecken des Endes der Kurbelwelle (40) zu bilden,
und **dass** das Triebwerk (20) die Aufwölbungswand (24Fb, 24Rb) aufweist, die mit einem Entlüftungsloch (24Fc, 24Rc) gebildet ist, welches mit dem Lager (43) verbunden ist.

2. Triebwerk (20) nach Anspruch 1, wobei ein Filterelement (120) in dem äußeren Umfang der Aufwölbungswand (24Fb, 24Rb) angeordnet ist.

3. Triebwerk (20) nach Anspruch 1 oder 2, wobei die Kühlluftströmungs-Einlassanschlüsse (24Fe) gebohrt sind, während eine Mehrzahl von Verbindungsrippen (24Fd) radial an der außenseitigen Seitenwand am äußeren Umfang des ringförmigen Lagerteiles (24Fa) zurückbleibt,
und wobei eine oder zwei der Verbindungsrippen (24Fd, 24Rd) in einer Ebene gebildet sind, welche zumindest eine Antriebswelle und eine angetriebene Welle (82) des stufenlosen Getriebes (50) vom Riementyp enthält.

## Revendications

1. Groupe moteur (20) comprenant une transmission non étagée du type à courroie (50) disposée sur un côté latéral d'un boîtier de transmission (23) servant également de carter moteur permettant de supporter avec faculté de rotation un vilebrequin (40) d'un moteur à combustion interne (30), et un capot de boîtier de transmission (24) disposé sur ledit boîtier de transmission (23) de façon à recouvrir ladite transmission non étagée de type à courroie (50) et former ainsi une chambre de transmission (50C),
dans lequel une poulie d'entraînement (51) comprend une demi-poulie fixe (51s) et une demi-poulie mobile (51d) qui sont disposées sur ledit vilebrequin (40) de ladite transmission non étagée de type à courroie (50), ladite demi-poulie fixe (51s) sur le côté dudit capot de boîtier de transmission étant pourvue d'un ventilateur de refroidissement (51F) ;
ledit capot de boîtier de transmission (24) est formé avec une partie de palier annulaire (24Fa) permettant de supporter avec faculté de rotation une partie d'extrémité dudit vilebrequin (40) via un palier (43) ; et
une paroi latérale de périphérie externe au niveau de la périphérie externe de ladite partie de palier annulaire (24Fa) est formée avec des lumières d'admission de circulation d'air de refroidissement (24Fe) pour introduire une circulation d'air de refroidissement dans ladite chambre de transmission (50C) ;
**caractérisé en ce qu'**une paroi latérale côté interne sur le côté interne de ladite partie de palier annulaire (24Fa) est bombée vers le côté externe dans la direction axiale afin de former une paroi bombée (24Fb, 24Rb) permettant de recouvrir l'extrémité dudit vilebrequin (40) et
le groupe moteur (20) comporte ladite paroi bombée (24Fb, 24Rb) qui est formée avec un évent (24Fc, 24Rc) communiquant avec ledit palier (43).

2. Groupe moteur (20) selon la revendication 1, dans lequel un élément de filtre (120) est disposé dans la périphérie externe de ladite paroi bombée (24Fb, 24Rb).

3. Groupe moteur (20) selon l'une quelconque des revendications 1 ou 2, dans lequel lesdites lumières d'admission de circulation d'air de refroidissement (24Fe) sont alésées tout en laissant une pluralité de nervures de liaison (24Fd) radialement au niveau de ladite paroi latérale côté externe à la périphérie externe de ladite partie de palier annulaire (24Fa) ; et
une ou deux desdites nervures de liaison (24Fd, 24Rd) sont formées dans un plan contenant au moins un arbre d'entraînement et un arbre entraîné (82) dans ladite transmission non étagée de type à courroie (50).
